# EUROPÄISCHE PATENTSCHRIFT

(11) **EP 2 512 837 B1**
(45) Veröffentlichungstag und Bekanntmachung des Hinweises auf die Patenterteilung: **09.10.2013**
(21) Anmeldenummer: 10790757.8
(22) Anmeldetag: 09.12.2010
(51) Int. Cl.: B60C 23/04

(54) **REIFENBEFÜLLASSISTENT**
TIRE FILLING ASSISTANT
DISPOSITIF D'AIDE AU GONFLAGE DE PNEUMATIQUES

(30) Priorität: 18.12.2009 DE 102009058881
(43) Veröffentlichungstag der Anmeldung: 24.10.2012
(73) Patentinhaber: Continental Automotive GmbH, 30165 Hannover (DE)
(72) Erfinder: KUCHLER, Gregor, 93055 Regensburg (DE); FISCHER, Frank, 93057 Regensburg (DE); SPOTKA, Jürgen, 93128 Regenstauf (DE)
(86) Internationale Anmeldenummer: PCT/EP2010/069234
(87) Internationale Veröffentlichungsnummer: WO 2011/073072

(56) Entgegenhaltungen:
- DE-A1- 10 144 359
- DE-A1-102004 022 930
- DE-C1- 4 224 498
- US-A- 5 335 540
- US-A1- 2004 099 055

## Beschreibung

Die Erfindung betrifft eine Vorrichtung zum Überwachen eines Füllzustands einer Mehrzahl von Reifen eines Fahrzeugs.

Ferner betrifft die Erfindung ein Fahrzeug.

Die Erfindung betrifft ferner ein Verfahren zum Überwachen eines Füllzustands einer Mehrzahl von Reifen eines Fahrzeugs.

Darüber hinaus betrifft die Erfindung ein Programm-Element.

Die Erfindung betrifft ferner ein Computerlesbares Speichermedium.

Moderne Kraftfahrzeuge bilden komplexe Systeme von Hardware und Software. Zur Regelung und Steuerung des mechatronischen Systems Automobil kommt eine hohe Anzahl verschiedenster Steuergeräte zum Einsatz. Intelligente Reifensystem integrieren auch Sensoren und die Berücksichtigung entsprechender Sensordaten in den Betrieb eines Kraftfahrzeugs und messen zum Beispiel auch den Reifendruck.

Herkömmliche Reifendruckkontrollsysteme weisen den Fahrer auf unterbefüllte Reifen hin. Beim Befüllen des Reifens ist der Fahrer auf externe Hilfsmittel und Messgeräte angewiesen.

Die US 2004/0099055A1 offenbart ein Reifendruckkontrollsystem mit einem radseitig angeordneten ersten Temperatursensor zum Messen der internen Temperatur des Reifens und einem fahrzeugseitig angeordneten zweiten Temperatursensor zur Messung der Umgebungstemperatur. Basierend auf den Messdaten des ersten und zweiten Temperatursensors wird der gemessene Reifendruck um einen Temperatureinfluss kompensiert.

Die DE 10 2004 022 930 A1 offenbart ein weiteres Reifenluftdruckkontrollsystem, bei dem während der Befüllung des Reifens mit Luftdruck eine Lampe in Abhängigkeit des Luftdrucks mit unterschiedlichen Mustern leuchtet.

Die DE 4224498 C1 beschreibt ein Reifendruckkontrollsystem mit einem Reifenbefüllungsassistenten. Auf einer Befüllanzeige erscheinen Symbole je nachdem, ob Luft in den Reifen nachgefüllt beziehungsweise abgelassen werden soll.

Aus der DE 10144359 A1 ist ein Reifendruckkontrollsystem mit einem Sensor bekannt, der erkennen kann, ob ein Tankstopp eingelegt wurde.

Der Erfindung liegt die Aufgabe zugrunde, ein Reifensystem bereitzustellen, bei dem ein Fahrer mit hohem Bedienerkomfort und fehlerrobust den Reifendruck eines Fahrzeugs überwachen kann.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird eine Vorrichtung zum Überwachen eines Füllzustands einer Mehrzahl von Reifen eines Fahrzeugs geschaffen, die eine Situationserkennungseinheit aufweist, die zum Erkennen einer Situation eingerichtet ist, in der ein Anpassen des Füllzustands von mindestens einem der Reifen des Fahrzeugs zu erwarten ist. Die Vorrichtung weist ferner einen Füllzustandsanpassungsassistenten auf, der eingerichtet ist, bei Erkennen des Vorliegens der Situation einem Benutzer des Fahrzeugs während des Anpassens des Füllzustands des mindestens einen Reifens selbsttätig zu assistieren.

Gemäß einem anderen Ausführungsbeispiel der Erfindung wird ein Fahrzeug (beispielsweise ein Kraftfahrzeug, insbesondere ein Personenkraftfahrzeug oder ein Lastkraftfahrzeug oder ein Motorrad) mit einer Vorrichtung mit den oben genannten Merkmalen zum Überwachen eines Füllzustands einer Mehrzahl von Reifen des Fahrzeugs bereitgestellt.

Gemäß einem weiteren Ausführungsbeispiel der Erfindung wird ein Verfahren zum Überwachen eines Füllzustands einer Mehrzahl von Reifen eines Fahrzeugs bereitgestellt. Bei dem Verfahren wird eine Situation erkannt, in der ein Anpassen eines Füllzustands von mindestens einem der Reifen des Fahrzeugs zu erwarten ist. Ferner wird einem Benutzer des Fahrzeugs während des Anpassens des Füllzustands des mindestens einen Reifens bei Erkennen des Vorliegens der Situation selbsttätig assistiert.

In einem computerlesbaren Speichermedium gemäß einem Ausführungsbeispiel der vorliegenden Erfindung ist ein Programm zum Überwachen eines Füllzustands einer Mehrzahl von Reifen eines Fahrzeugs gespeichert, welches Programm zum Durchführen oder Steuern des Verfahrens mit den oben beschriebenen Merkmalen eingerichtet ist, wenn es von einem Prozessor ausgeführt wird.

Ein Programm-Element (Computerprogramm-Element) gemäß einem Ausführungsbeispiel der vorliegenden Erfindung weist die oben beschriebenen Verfahrensschritte auf (bzw. steuert diese oder führt diese durch), wenn es ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Gemäß einem exemplarischen Ausführungsbeispiel kann ein Benutzer, zum Beispiel ein Fahrer eines Fahrzeugs, darin unterstützt werden, einen Reifen oder mehrere Reifen des Fahrzeugs mit zusätzlicher Druckluft zu befüllen oder überschüssige Druckluft aus dem oder den Reifen abzulassen. Hierfür wird zum Beispiel in der Fahrzeugelektronik eine Situationserkennungseinheit vorgesehen, welche die Fähigkeit aufweist, auf Basis eines oder mehrerer Entscheidungskriterien eine Situation zu ermitteln, in welcher mit ausreichend hoher Wahrscheinlichkeit davon ausgegangen werden kann, dass der Füllzustand eines Reifens oder mehrerer der Reifen durch den Benutzer angepasst werden wird. Ist eine solche Be- oder Entfüllsituation mit hinreichender Wahrscheinlichkeit, zum Beispiel angezeigt mittels ausreichender Kriterienübereinstimmung mit dem vorliegenden Szenario, ermittelt worden, so kann das Aktivieren eines Füllzustandsanpassungsassistenten durchgeführt werden. Der Füllzustandsanpassungsassistent begleitet den Benutzer während des Be- und/oder Entfüllvorgangs und leitet den Benutzer dadurch intuitiv und fehlerrobust durch ein technisch anspruchsvolles Umfeld, ohne dass zusätzliche externe Hilfsmittel (außer einer Druckluftzuführ-und -entnahmeeinheit) erforderlich wären.

Im Weiteren werden weitere Ausgestaltungen der Vorrichtung beschrieben. Diese gelten auch für das Fahrzeug, für das Verfahren, für das Programmelement und für das computerlesbare Speichermedium.

Die Situationserkennungseinheit und der Füllzustandsanpassungsassistent können Komponenten einer Fahrzeugelektronik sein. Anders ausgedrückt kann die Assistenzfunktion allein durch die Fahrzeugelektronik bereitgestellt werden, ohne dass hierfür externe Hilfsmittel erforderlich sind. Dadurch ist ein autarkes System geschaffen, mit dem die Be- und/oder Entfüllung für einen Benutzer erleichtert werden kann.

Die Situationserkennungseinheit kann eingerichtet sein, eine Be- bzw. Entfüllsituation zu erkennen, wenn eines oder mehrere der folgenden oder anderer Kriterien erfüllt ist. Zum Beispiel kann das Entriegeln einer Tankklappe durch einen Benutzer sensorisch erfasst werden und als Anzeichen dafür gewertet werden, dass der Benutzer an einer Tankstelle angekommen ist. Da an einer Tankstelle üblicherweise die Infrastruktur zum Be- und/oder Entfüllen von Reifen bereitgestellt ist, besteht eine gute Wahrscheinlichkeit dafür, dass mit dem Entriegeln der Tankklappe zeitnah auch mit einem Anpassen des Befüllungszustands des Reifens gerechnet werden kann. Ein anderes Kriterium kann das Erkennen des Abstellens des Fahrzeugs sein, insbesondere des Abstellens des Motors des Fahrzeugs nach vorheriger Mitteilung an den Benutzer des Fahrzeugs, dass der Füllzustand von zumindest einem der Reifen anzupassen (das heißt der Reifendruck zu erhöhen oder zu erniedrigen) ist. Wenn also die Fahrzeugelektronik einen Benutzer, zum Beispiel mittels optischer oder akustischer Anzeige, darüber informiert hat, dass zum Beispiel für eine oder mehrere Reifen eine Erhöhung oder Erniedrigung des Reifendrucks durchgeführt werden sollte, kann dies als Indiz oder Kriterium angesehen werden, dass nunmehr ein Füllzustand eines Reifens angepasst werden soll. Noch ein anderes Kriterium kann das Erkennen des Abstellens des Fahrzeugs an einer Tankstelle sein. Dies kann zum Beispiel sensorisch erfasst werden, zum Beispiel mittels eines Navigationssystems oder eines optischen Sensors, der einen optischen Marker an einer solchen Tankstelle erkennen kann. Auch das Erkennen eines Abstellens des Fahrzeugs, nachdem ein Treibstoffzustand in einem Tank des Fahrzeugs unter einem voreingestellten Schwellwert abgesunken ist, zum Beispiel bei Unterschreiten eines Reservefüllstandniveaus, kann als ein solches Kriterium angesehen werden.

Die Situationserkennungseinheit kann eingerichtet sein, bei Erkennen der Situation den Füllzustandsanpassungsassistenten zu aktivieren. Anders ausgedrückt kann der Füllzustandsanpassungsassistent, der auch ein Strom- oder Energieabnehmer in dem Fahrzeug ist, solange in einem deaktivierten oder Schlafzustand gehalten werden, bis mit ausreichend hoher Wahrscheinlichkeit eine Situation eingetreten ist, in welcher der Füllzustandsanpassungsassistent einen Benutzer während eines Fülländerungsprozesses unterstützen soll.

Der Füllzustandsanpassungsassistent kann eingerichtet sein, bei Erkennen des Vorliegens der Situation ein Wiederholintervall eines Erfassens eines Reifendrucks von mindestens einem der Reifen zu erhöhen. Da während eines zu erwartenden Be- und/oder Entfüllens eine wesentlich schnellere Änderung des Reifendrucks über die Zeit zu erwarten ist als über den Normalbetrieb eines Kraftfahrzeugs hinweg, kann ein solches Wiederholintervall zum Beispiel von Stunden oder Tagen auf Sekunden oder weniger verringert werden. Dadurch kann während des eigentlichen Veränderns des Füllstands dem Benutzer mit hoher Zeitauflösung der aktuelle Druck angezeigt werden.

In einem solchen exemplarischen Ausführungsbeispiel kann die situationsgerechte Anpassung von Mess- oder Sendehäufigkeiten eine besondere Einrichtung bzw. Intelligenz im (zum Beispiel herkömmlich nicht besonders intelligenten) Rad/Reifenmodul erfordern. Eine Strategie ist, dass das Radmodul zum Beispiel alle 1s bis 20s (das heißt relativ häufig) den Druck misst, auch wenn nur einmal pro Minute (das heißt relativ selten) letztlich übertragen wird. Durch ein solches Überabtasten (Oversampling) der Druckinformation ergibt sich eine entsprechend frühere Detektionsmöglichkeit von Druckveränderungen. Eine solche Funktion kann auch eingesetzt werden, um spontane Druckverlustszenarien (zum Beispiel Reifen wird während der Fahrt von Fremdkörper durchstoßen) so schnell wie möglich erkennen zu können, um dann aus dem regelmäßigen Senden mit einer Sendehäufigkeit in ein regelmäßiges Senden mit erhöhter Sendehäufigkeit zu wechseln. Im Rahmen des beschriebenen Ausführungsbeispiels der Erfindung kann eine solche Funktion so eingesetzt werden, dass insbesondere für eine bestimmte Zeit nach dem Wechsel von Fahren in Parken eine Drucküberwachung mit erhöhter Messfrequenz (aber keiner oder sehr reduzierter Sendehäufigkeit) vorgenommen wird. Erkennt der Sensor in dieser Zeit einen spontanen Druckanstieg oder -abfall (insbesondere einen Druckanstieg oder -abfall, der einen vorgebbaren Schwellwert überschreitet), kann ein Senden mit entsprechend erhöhter Häufigkeit, zum Beispiel 20 bis 180 mal pro Sekunde, bevorzugt 60 mal pro Sekunde, aufgenommen werden. Liegen für eine bestimmte Zeit stabile Druckwerte an, kehrt der Sender zum erhöhten Messintervall bei keiner oder sehr reduzierter Sendung zurück. Nach Ablauf einer weiteren vorbestimmten Zeit wechselt der Sensor dann ganz in einen Parkmodus, aus dem der Sensor zum Beispiel wieder durch die Bewegung bei Beginn der nächsten Fahrt erwacht.

Der Füllzustandsanpassungsassistent kann zum Beispiel als fahrzeugseitige Komponente ausgeführt werden, die mangels einer bidirektionalen Kommunikation zum Rad-/Reifenmodul keine Möglichkeit hat, die gewünschte Erhöhung der Sendehäufigkeit dem betroffenen Sender mitzuteilen. Vorteilhaft ist es in einem solchen Szenario daher, wenn der Füllzustandsanpassungsassistent auch eine Komponente umfasst, die als Software-Modul im Sensor fungiert und bei Vorliegen bestimmter Druckänderungen selbsttätig die Sendehäufigkeit anpasst, um einem fahrzeugseitigen Teil des Füllzustandsanpassungsassistent dann die Verarbeitung/Anzeige der jetzt mit erhöhter Wiederholfrequenz vorliegenden Daten zu ermöglichen.

Der Füllzustandsanpassungsassistent kann eingerichtet sein, bei Erkennen des Vorliegens der Situation dem Benutzer anzuzeigen, ob eine Be- oder Entfüllung für einen bestimmten Reifen weiter fortzusetzen ist oder ob eine Befüllung abgeschlossen werden sollte. Eine solche Anzeige kann zum Beispiel optisch und/oder akustisch erfolgen.

Insbesondere kann die Vorrichtung eine Mensch-Maschine-Schnittstelle (zum Beispiel eine graphische Anzeigeeinheit, optional mit einer Eingabeeinheit zum Eingeben von Anweisungen durch den Benutzer) aufweisen, die eingerichtet ist, dem Benutzer eine Assistierinformation des Füllzustandsanpassungsassistenten anzuzeigen. Zum Beispiel kann an jedem Reifen eine Flüssigkristallanzeige vorgesehen sein, die dem Benutzer anzeigen kann, ob ein gegenwärtiger Reifendruck zu hoch oder zu niedrig oder genau richtig ist. Es kann auch zentral eine gemeinsame Mensch-Maschine-Schnittstelle vorgesehen sein, die dem Benutzer optisch und/oder akustisch entsprechend informiert.

Gemäß einem Ausführungsbeispiel kann der Füllzustandsanpassungsassistent eingerichtet sein, eine Fahrzeugressource anzusteuern und somit zu nutzen, um dem Benutzer eine Assistierinformation des Füllzustandsanpassungsassistenten anzuzeigen. Zum Beispiel kann eine ohnehin vorhandene Fahrgastzellenbeleuchtung verwendet werden, um einen Füllstand anzuzeigen. So kann zum Beispiel ein normales Blinken eine Befüllung, eine durchgehende Beleuchtung eine akzeptablen Befüllzustand und ein schnelleres Blinken mit einer höheren Blinkfrequenz eine Überfüllung anzeigen. Auch eine Soundanlage kann alternativ oder ergänzend verwendet werden, indem zum Beispiel mittels Piepsgeräuschen eine Befüllung, mittels eines durchgehend Geräusches eine ausreichende Füllung und mittels eines schnelleren Piepsens eine Überfüllung angezeigt werden kann. Somit können die genannten oder anderen Ressourcen (zum Beispiel auch eine Außenbeleuchtung des Kraftfahrzeugs) synergistisch mitverwendet werden, um ohne technischen Zusatzaufwand die Befüllung für einen Benutzer intuitiv und einfach zu gestalten.

Die Vorrichtung kann eine Füllablaufvorhersageeinheit aufweisen, die eingerichtet sein kann, einen wahrscheinlichen Füllablauf vorherzusagen und diesen dem Füllzustandsanpassungsassistenten als Grundlage für das Assistieren zu übermitteln. Mit anderen Worten kann die Füllablaufvorhersageeinheit eines oder mehrere Kriterien anwenden, nach denen der vorliegende Benutzer oder ein durchschnittlicher Benutzer üblicherweise vorgeht, um eine Befüllung vorzunehmen. Beispiele für Kriterien, die hierfür angewendet werden können, sind, dass der Beginn des Füllablaufs an einem einer Fahrertür des Fahrzeugs räumlich nächstgelegenen Reifen beginnt. Dies ist üblicherweise der Reifen links vorne. Ein Benutzer wird häufig diesen Reifen als erstes auswählen, um eine Befüllung vorzunehmen. Wenn allerdings der Benutzer zuvor eine Mitteilung erhalten hat, dass ein ganz bestimmter, anderer Reifen zu befüllen ist, so ist die Wahrscheinlichkeit groß, dass der Benutzer zunächst diesen kritischen Reifen be- oder entfüllen wird und sich erst dann anderen Reifen zuwendet wird. Alternativ oder ergänzend kann angenommen werden, dass der Füllablauf im Uhrzeigersinn das Fahrzeug erfolgt. Dies ist ein übliches Vorgehen von Benutzern. Noch ein anderes Kriterium ist, dass der Füllablauf in Übereinstimmung mit einem oder mehreren Füllabläufen des Benutzers in der Vergangenheit erfolgen kann. Zum Beispiel kann das System historische Daten für einen bestimmten Benutzer aufzeichnen und somit Gewohnheiten eines bestimmten Benutzers erkennen. Diesen Gewohnheiten entsprechend kann das System dann lernfähig einen wahrscheinlichen Füllablauf voraussagen, was die Zuverlässigkeit des Assistierens weiter erhöht.

Die Vorrichtung kann eine Füllzustandserkennungseinheit mit einer Mehrzahl von Sensoren aufweisen, die an den Reifen des Fahrzeugs angeordnet sind und zum Ermitteln eines Reifendrucks für jeden der Reifen eingerichtet sind. Diese aktuellen Reifendruckinformationen, die durch Drucksensoren an den einzelnen Reifen (oder an den entsprechenden Felgen) angeordnet sein können, können als Basis für das Assistieren dienen.

Im Weiteren werden zusätzliche Ausgestaltungen des Fahrzeugs beschrieben. Diese gelten auch für die Vorrichtung, für das Verfahren, für das Programm-Element und für das computerlesbare Speichermedium.

Das Fahrzeug kann zum Beispiel ein Automobil (zum Beispiel ein Kraftfahrzeug, insbesondere ein Personenkraftfahrzeug oder Lastkraftfahrzeug) sein. Es ist aber auch möglich, das erfindungsgemäße System in einem Zug, in einem Fahrrad oder dergleichen zu implementieren.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

Fig. 1 zeigt ein System zum Überwachen eines Füllzustands einer Mehrzahl von Reifen eines Fahrzeugs gemäß einem exemplarischen Ausführungsbeispiel der Erfindung.

Fig. 2 bis Fig. 5 zeigen Ablaufdiagramme eines Verfahrens gemäß einem exemplarischen Ausführungsbeispiel der Erfindung.

Gleiche oder ähnliche Komponenten in unterschiedlichen Figu ren sind mit gleichen Bezugsziffern versehen.

Herkömmliche Reifendruckkontrollsysteme weisen den Fahrer auf unterbefüllte Reifen hin. Beim Befüllen des Reifens wird der Fahrer jedoch vom Fahrzeug-System nicht weiter unterstützt, sondern ist auf externe Hilfsmittel und Messgeräte angewiesen.

Gemäß einem exemplarischen Ausführungsbeispiel der Erfindung ist es möglich, den Fahrer unter Verwendung eines vorhandenen Reifendruckkontrollsystems beim Befüllen des Reifens gezielt zu unterstützen und zusätzliche externe Messgeräte überflüssig zu machen bzw. in ihrer Genauigkeit zu verbessern.

Schritte bei einem Ausführungsbeispiel der Erfindung umfassen das Erkennen der Startbedingung, die Festlegung der Reihenfolge und die Regelung der Befüllung über gezielte Ausgaben/Mitteilungen an den Fahrer.

### Startbedingung:

Ziel ist hier, eine Situation zu erkennen, in welcher der Fahrer den Reifen einfach befüllen kann, oder dies ohnehin schon begonnen hat (sogenannte dP Emissionen). Geeignete Trigger können zum Beispiel das elektronische Entriegeln der Tankklappe sein, oder das Abstellen des Fahrzeugs nach dem Anzeigen einer Druckwarnung, oder die Erkenntnis, dass das Fahrzeug an einer Tankstelle abgestellt wird, oder die Tatsache, dass der Tankinhalt unter zum Beispiel 20% gefallen ist und das Fahrzeug abgestellt wird, etc. Wenn der Algorithmus erkannt hat, dass eine Befüllsituation vorliegt bzw. vorliegen kann, soll der Befüllassistent gestartet werden.

### Reihenfolge:

Hier geht es darum, die intuitive Fahrervorgehensweise beim Befüllen nachzustellen. Dazu kann am nächstgelegenen Rad vorne links begonnen werden (bei Rechtslenkern vorne rechts) und die Prozedur im Uhrzeigersinn um das Fahrzeug herum fortgesetzt werden (alternativ: gegen den Uhrzeigersinn). Die Startposition kann abweichend gewählt werden, wenn an anderer Stelle ein Druckproblem vorliegt, das zum Beispiel dem Fahrer auch schon angezeigt worden ist. Beispielsweise wäre es in bestimmten Szenarien nicht sinnvoll, zunächst vorne links zu beginnen, wenn während der Fahrt schon ein kritischer Unterdruck an anderer Stelle angezeigt wurde. Der Fahrer erwartet dann intuitiv, zunächst das Rad mit dem bewarnten Unterdruck auffüllen zu müssen, und wird sich erst danach um weitere, ggf. leicht unterbefüllte Räder kümmern wollen.

### Befüllassistent:

Beim Befüllen sollen die Radelektroniken bevorzugt beschleunigt senden. Dazu ist eine Vorrichtung in der Radelektronik nötig, die nach dem Abstellen des Fahrzeugs (wenn die Radelektronik aus dem drehenden Zustand kommend ein Ausbleiben des Drehsignals erkennt) die Druckmessung mit erhöhter Wiederholfrequenz (zum Beispiel alle 1 s oder alle 2 s oder alle 0,3 s) für eine bestimmte Zeit (zum Beispiel 5 min, 10 min, 20 min) veranlasst. Wenn während dieser Zeit befüllt wird, erkennt die Radelektronik die Druckänderung gegenüber der vorherigen Messung und wechselt in einen beschleunigten Funkmodus, in dem zum Beispiel alle 0,5 s oder alle 1 s oder alle 2 s der Druck gemessen und übertragen wird, bis keine weitere Druckänderung mehr stattfindet (ggf. noch einige Sekunden länger, um kurze Pausen beim Befüllen zuzulassen). Der fahrzeugseitige Befüllassistent verarbeitet diese Information (sogenannte dP Telegramme) und signalisiert dem Fahrer, ob weiterhin aufgefüllt werden soll, der Zieldruck schon erreicht ist, oder der Zieldruck gar schon überschritten wurde und wieder abgesenkt werden muss. Nach oben wie nach unten kann der Zieldruck vorteilhaft mit einer Hysterese beaufschlagt werden (ggf. unsymmetrisch), um Torggeln der Anzeigen zu vermeiden.

So kann reihum der Fahrer beim Befüllen der Reifen, die Druckänderungen benötigen, angeleitet werden. Das Ergebnis kann plausibilisiert werden in Hinblick zum Beispiel auf Einhaltung der gesetzlichen Grenzen und Schwellen, oder auf identische Drücke pro Achse (innerhalb gewisser Toleranzen, zum Beispiel 0,2 bar oder 0,3 bar) oder auf identische Lastzustände (Vermeidung von teilbeladenen Drücken vorne, vollbeladenen Drücken hinten). Beim Abbrechen der Befüllung einer Position (zum Beispiel durch Losfahren oder Befüllen einer anderen Position) reagiert die Funktion flexibel auf die Fahreraktionen und setzt ggf. korrekt befüllte Drücke im System um, während die nicht oder nicht korrekt befüllten Positionen ggf. weiterhin bewarnt werden).

### Ausgabe/Mensch-Maschine-Schnittstelle:

Zur Fahrerkommunikation können vielfältigste Wege benutzt werden. Es bieten sich zum Beispiel die Blinkerlichter an, ebenso die gesamte Innenraumbeleuchtung oder zum Beispiel auch das Fahrzeug-Soundsystem. Mit Lichtern kann dabei die Position angezeigt werden und die Aktion über Blinken codiert werden: Zum Beispiel heißt Blinken auffüllen, Leuchten ist Reifendruck in Ordnung, hektisches Blinken heißt ablassen. Über Lautsprecher können entweder Signaltöne oder vorzugsweise Sprachhinweise ausgegeben werden. Weitere Kommunikationsmittel können ebenfalls eingesetzt werden (zum Beispiel Mobiltelefon, Funkschlüssel mit Display, etc.).

Eine Idee gemäß einem exemplarischen Ausführungsbeispiel der Erfindung besteht im intelligenten Erkennen einer Befüllsituation oder einer Situation, in der Befüllung sinnvoll und möglich ist. Weiter können vorhandene Fahrzeug-Systeme optimal genutzt werden, um dem Fahrer in einer ungewohnten und nicht alltäglichen Situation bestmöglich beizustehen. Es entstehen keine systembedingten Mehrkosten, sondern vorhandene Ressourcen werden synergistisch mitgenutzt.

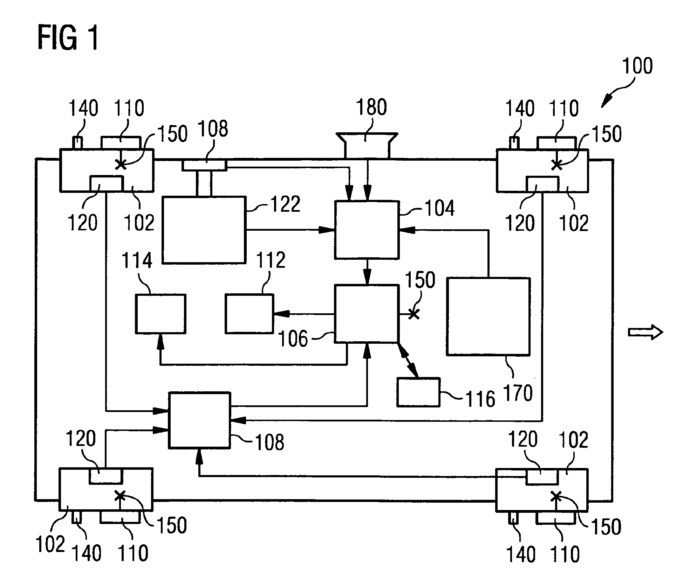

Fig. 1 zeigt ein Fahrzeug 100 mit einer Vorrichtung zum Überwachen eines Füllzustands einer Mehrzahl von Reifen 102 gemäß einem exemplarischen Ausführungsbeispiel der Erfindung.

Jeder der Reifen 102 enthält einen zugeordneten Reifendrucksensor 120 und ein Ventil 140, das mit einer Be- oder Entfülleinrichtung (nicht gezeigt) zum Einfüllen oder Ablassen von Reifendruckluft versehen ist, das heißt zum Aufpumpen oder Abpumpen des Reifens 102. Darüber hinaus ist jeder Reifen 102 mit einer Flüssigkristallanzeige 110 versehen, die mit einem im Weiteren näher zu beschreibenden Füllzustandsanpassungsassistenten 106 drahtlos (alternativ drahtgebunden) gekoppelt ist. Dies ist in Fig. 1 schematisch durch entsprechende Sendeempfangsantennen 150 symbolisiert.

Das Fahrzeug 100 weist eine Anzahl von in Fig. 1 nur teilweise dargestellten Fahrzeugressourcen auf, zum Beispiel einen Tankdeckel 108, einen Tank 122, einen Motor 170, eine Innenraumbeleuchtung 112 und ein Soundsystem 114. Ferner ist an einem Außenbereich des Kraftfahrzeugs 100 eine Kamera 118 angebracht, die Umgebungsdaten aufnehmen kann.

Im Weiteren wird beschrieben, wie ein Benutzer, zum Beispiel ein Fahrer oder Beifahrer des Fahrzeugs 100, während eines Be- und/oder Entfüllvorgangs der Reifen 102 unterstützt oder angeleitet wird.

Zu diesem Zweck ist zunächst eine Situationserkennungseinheit 104 vorgesehen, die zum Erkennen einer Situation eingerichtet ist, in der ein Anpassen eines Füllzustands von mindestens einem der Reifen 102 des Fahrzeugs 100 zu erwarten ist. Hierfür erhält die Situationserkennungseinheit 104 ein Eingabesignal von der Kamera 180, indikativ für die jeweilige Umgebung des Fahrzeugs 100, zum Beispiel indikativ für einen Tankstellenaufenthalt. Ferner kann der Situationserkennungseinheit 104 mittels eines Sensorsignals übermittelt werden, dass ein Benutzer den Tankdeckel 108 des Fahrzeugs 100 betätigt hat. Auch die Tatsache, dass der Inhalt des Tanks 122 unter einen vorgebbaren Schwellwert, zum Beispiel einen Reservefüllstand, abgesunken ist, kann der Situationserkennungseinheit 104 übermittelt werden. Wenn der Motor 170 abgestellt wird, wird ein entsprechendes Signal ebenfalls der Situationserkennungseinheit 104 übermittelt. Die Situationserkennungseinheit 104 kann somit aus einem oder mehreren der beschriebenen Sensorsignale sowie aus weiteren nicht beschriebenen Sensorsignalen den Schluss ziehen, dass mit ausreichender Wahrscheinlichkeit ein Be- und/oder Entfüllen eines der Reifen 102 bevorsteht.

Wenn die Situationserkennungseinheit 104 ein solches Szenario erkannt hat, kann sie einen gekoppelten Füllzustandsanpassungsassistenten 106 aktivieren, zum Beispiel ausgehend von einem ausgeschalteten Zustand einschalten oder aus einem Schlafmodus aufwecken. Der Füllzustandsanpassungsassistent 106 ist eingerichtet, bei Erkennen des Vorliegens der Befüll- bzw. Entfüllsituation dem Benutzer des Fahrzeugs 100 während des Anpassens des Füllzustands des mindestens einen Reifens 102 selbsttätig (insbesondere automatisch, das heißt ohne Tätigwerden des Benutzers) zu assistieren. Mit anderen Worten kann der Füllzustandsanpassungsassistent 106 einen Algorithmus ablaufen lassen, mit dem der Benutzer ohne Notwendigkeit externer Hilfsmittel intuitiv durch den Be- oder Entfüllvorgang geführt werden kann.

Der Füllzustandsanpassungsassistent 106 kann, wenn eine Situation des Be- oder Entfüllens vorliegt, einen Reifendruck von mindestens einem der Reifen 102 in einem kürzeren Intervall bestimmten, als dies üblicherweise erfolgt. Zum Beispiel kann standardmäßig ein Reifendruck erfasst werden, um im Falle des unerwünschten Absinkens oder übermäßigen Anstiegs eines Reifendrucks den Benutzer hierüber zu informieren. Während des Be- oder Entfüllvorgangs jedoch kann es für einen Benutzer vorteilhaft sein, wenn die Reifendruckerfassung häufiger stattfindet als in einem Standardfall. Denn während des Be- oder Entfüllens ist damit zu rechnen, dass der Reifendruck wesentlich schneller steigt oder fällt als bei normalem Betrieb des Fahrzeugs. Der Füllzustandsanpassungsassistent 106 kann dem Benutzer zum Beispiel mitteilen, und zwar während eines Be- oder Entfüllens, wie der Fortschritt dieses Be- oder Entfüllens ist. Hierfür kann zum Beispiel an der Flüssigkristallanzeige 110 des zugeordneten Reifens 102 ein gegenwärtiger Druck digital angezeigt werden, im Vergleich zu einem gewünschten Druck. Dies ermöglicht es einem Benutzer, intuitiv die Be- oder Entfüllung des Reifens 102 vorzunehmen.

Alternativ oder ergänzend kann der Füllzustandsanpassungsassistent 106 auch von Fahrzeugressourcen, wie zum Beispiel der Innenraumbeleuchtung 112 oder dem Soundsystem 114, Gebrauch machen, um zum Beispiel den Fortschritt eines Be- oder Entfüllvorgangs anzuzeigen. So kann zum Beispiel ein optischer und/oder akustischer Code von der Innenraumbeleuchtung 112 und/oder dem Soundsystem 114 initiiert werden, zum Beispiel ein gepulstes Signal während der Notwendigkeit des Befüllens, ein dauerhaftes Signal bei Erreichen eines gewünschten Enddrucks und ein höherfrequent gepulstes Signal bei Überschreiten eines zulässigen Höchstdrucks. Somit kann von bereits vorhandenen Fahrzeugressourcen Gebrauch gemacht werden, ohne dass zusätzliches Equipment bereitgestellt werden muss, um einen benutzerfreundlichen Füllzustandsanpassungsassistenten 106 auszubilden.

Der Füllzustandsanpassungsassistent 106 kann ferner von einer Füllablaufvorhersageeinheit 116 unterstützt werden. Diese kann eingerichtet sein, einen wahrscheinlichen Füllablauf vorherzusagen und diesen dem Füllzustandsanpassungsassistenten 106 als Grundlage für das Assistieren zu übermitteln. So kann die Füllablaufvorhersageeinheit 116 zum Beispiel eine Gewohnheit eines Benutzers abbilden, mit dem einer Fahrertür des Fahrzeugs 100 nächstgelegenen Reifen 102 bei der Befüllung zu beginnen. Eine andere Vorhersage kann die Füllablaufvorhersageeinheit 116 jedoch in einem Fall treffen, in dem ein Benutzer zuvor über einen unerwünschten Druck in einem bestimmten der Reifen 102 informiert worden ist. In diesem Fall wird es zu erwarten sein, dass der Benutzer sich zunächst diesen Reifen 102 widmet und erst dann ggf. die übrigen Reifen 102 befüllt.

Eine Füllzustandserkennungseinheit 118 kann die Sensorsignale der Drucksensoren 120 empfangen und die verarbeiteten Druckwerte dem Füllzustandsüberwachungsassistenten 106 als Basis für das Assistieren übermitteln.

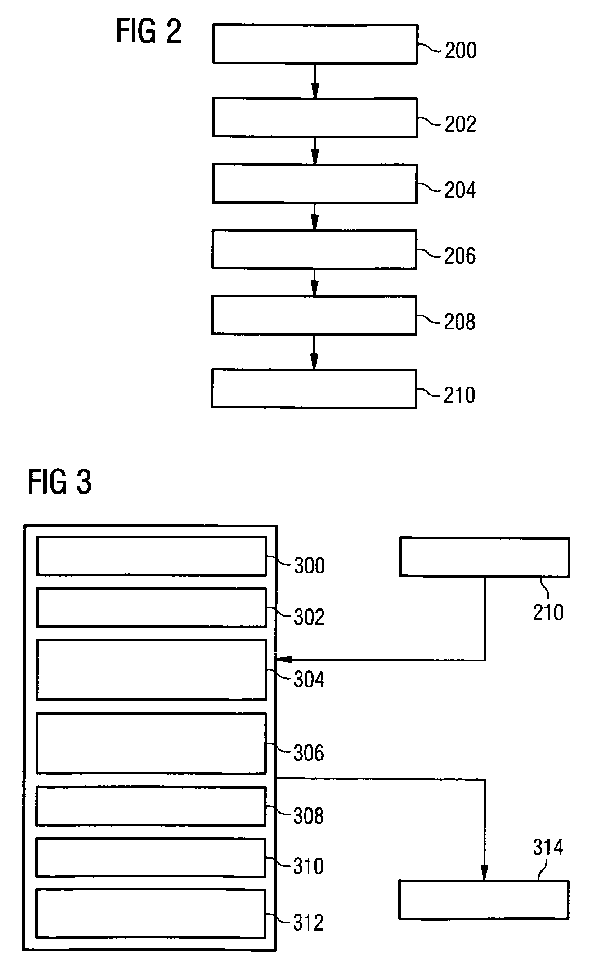

Im Weiteren werden bezugnehmend auf Fig. 2 bis Fig. 5 Prozessabläufe für den Betrieb eines Füllzustandsanpassungsassistenten gemäß einem exemplarischen Ausführungsbeispiel der Erfindung beschrieben.

Fig. 2 zeigt einen Ablauf, um Vorbedingungen zum Starten abzuklären. Nach Einschalten einer Zündung, siehe Block 200, wird in einem Block 202 abgefragt, ob ein Beladungszustand fertig ist. In einem Block 204 wird abgefragt, ob Lokalisierungsinformation verfügbar ist. In einem Block 206 wird abgefragt, ob Reifengrößeninformation verfügbar ist. In einem Block 208 wird abgefragt, ob Reifendrücke verfügbar sind. In einem Block 210 ist der Befüllungsassistent bereit.

Fig. 3 zeigt einen Prozessfluss, der Startbedingungen für ein Starten des Befüllungsassistenten veranschaulicht.

Ist der Befüllungsassistent bereit, siehe Block 210, so wird eine Reihe von Kriterien abgeprüft, um zu ermitteln, ob gegenwärtig eine Befüllsituation vorliegen könnte. So wird abgeprüft, ob der Treibstofftank entsperrt/offen ist, siehe Block 300. In einem Block 302 wird abgefragt, ob das Fahrzeug steht und eine Druckabweichung (dP größer Null) empfangen ist. In einem Block 304 wird geprüft, ob das Fahrzeug angehalten hat, der Treibstofftank fast leer (kleiner 20%) ist und die Zündung ausgeschaltet worden ist. In einem Block 306 wird geprüft, ob das Fahrzeug gestoppt hat und ein Navigationsgerät eine gegenwärtige Position des Fahrzeugs als eine Tankstelle identifiziert. In einem Block 308 wird geprüft, ob ein manueller Start des Befüllungsassistenten von einem Fahrer (in einem Menü) erfolgt ist. In einem Block 310 wird geprüft, ob das Fahrzeug angehalten hat, nachdem eine Warnung angezeigt worden ist, insbesondere eine Warnung zu geringen Reifendrucks. In einem Block 312 wird geprüft, ob eine Druckwarnung schon zur Anzeige bei ausgeschalteter Zündung ansteht und das Fahrzeug angehalten hat. Basierend auf einem oder mehreren der Kriterien in den Blöcken 302, 304, 306, 308, 310, 312 kann dann der Befüllassistent gestartet werden, siehe Block 314.

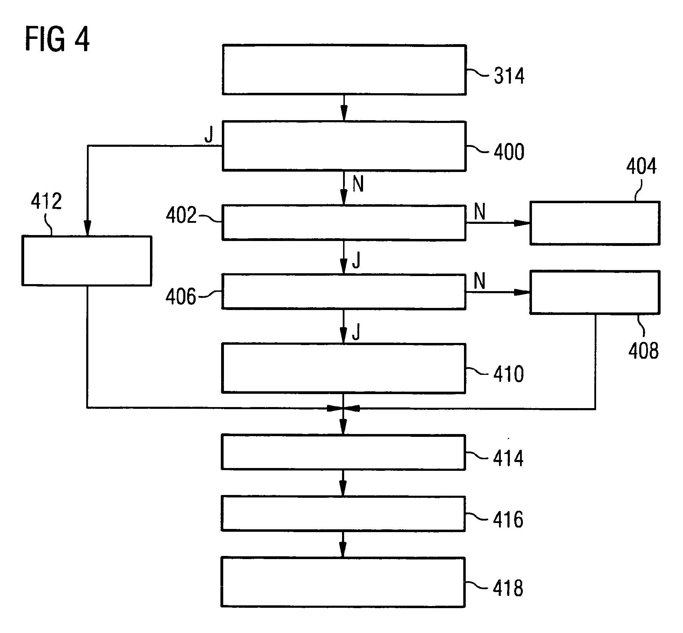

In Fig. 4 ist ein Ablaufdiagramm gezeigt, welches die Definition der Reihenfolge für eine Füllprozedur zeigt. Nach Start des Befüllassistenten, siehe Block 314, wird in einem Block 400 abgefragt, ob eine Druckdiskrepanz dP empfangen worden ist. Falls nein, wird in einem Block 402 geprüft, ob eine Maßnahme erforderlich ist. Falls nein, wird in einem Block 404 die Prozedur beendet. Falls ja, wird in einem Block 406 abgefragt, ob eine Warnung vorliegt. Falls nein, wird in einem Block 408 mit einer linken vorderen Reifenposition begonnen. Falls ja, wird mit einer Position begonnen, welche die höchste Priorität der Warnung aufweist, siehe Block 410. Falls die Antwort in Block 400 ja ist, wird mit der Position mit der Druckdiskrepanz begonnen, siehe Block 412. Block 414 zeigt an, dass eine Füllposition dann im Uhrzeigersinn abgearbeitet wird. Block 416 eliminiert Positionen ohne erforderliche Maßnahmen. In Block 418 ist die Reihenfolge festgelegt.

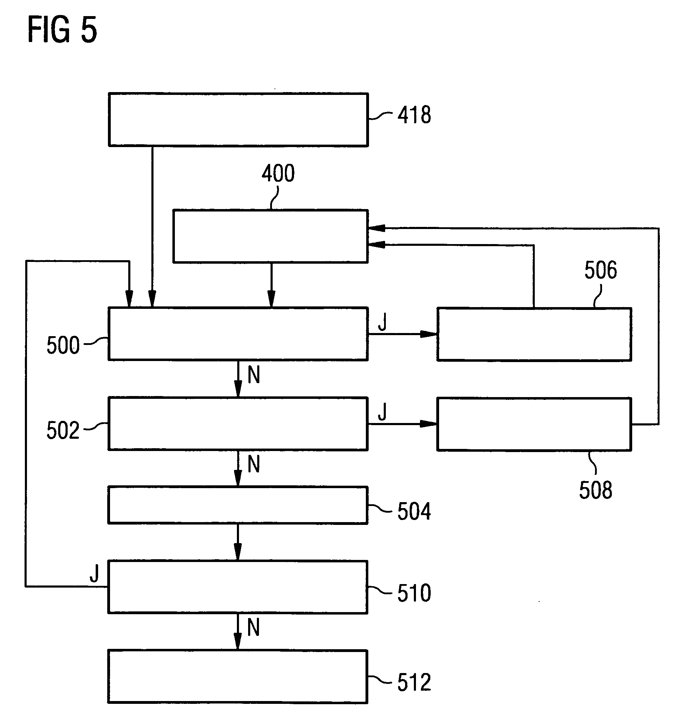

Fig. 5 zeigt den Prozessfluss während einer Füllprozedur. Wenn die Reihenfolge festgelegt ist, siehe Block 418, wird in einem Block 500 geprüft, ob die Druckdiskrepanz dP kleiner als RCP abzüglich einer Hysterese ist. Falls nein, siehe Block 502, wird geprüft, ob die Druckdiskrepanz dP größer als RCP plus eine Hysterese ist. Falls nein, wird an einer Mensch-Maschine-Schnittstelle "stop" angezeigt, siehe Block 504. Falls die Antwort in Block 500 ja ist, wird an der Mensch-Maschine-Schnittstelle eine Erhöhung des Drucks erbeten, siehe Block 506. Falls die Antwort bei Block 502 ja war, wird an der Mensch-Maschine-Schnittstelle das Erfordernis eines niedrigeren Druck angezeigt, siehe Block 508.

Auf Block 504 folgt ein Block 510, bei dem abgeprüft wird, ob für einen weiteren Reifen das Erfordernis einer Maßnahme besteht. Falls ja, so wird die Prozedur mit Block 500 fortgesetzt. Falls nein, so wird in Block 512 der Befüllassistent beendet.

Fahrzeugressourcen, die für den Befüllassistenten mitverwendet werden können, sind bevorzugt Blinker, Spiegellichter, Vorder- oder Rücklichter, Innenlichter, "Welcome home"-Lichter, Lautsprecher des Soundsystems. Ein Mobiltelefon über SMS oder Bluetooth, eine Displayanzeige oder die Hupe sind weitere Fahrzeugressourcen, die verwendet werden können. Ebenfalls denkbar ist eine Verwendung einer Zentralverriegelung, von Fensterhebern bzw. elektrisch einziehbaren Seitenspiegeln.

## Patentansprüche

1. Vorrichtung zum Überwachen eines Füllzustands einer Mehrzahl von Reifen (102) eines Fahrzeugs (100), wobei die Vorrichtung aufweist:
• eine Situationserkennungseinheit (104), die zum Erkennen einer Situation eingerichtet ist, in der ein Anpassen des Füllzustands von mindestens einem der Reifen (102) des Fahrzeugs (100) zu erwarten ist, und
• einen Füllzustandsanpassungsassistenten (106), der eingerichtet ist, bei Erkennen des Vorliegens der Situation einem Benutzer des Fahrzeugs (100) während des Anpassens des Füllzustands des mindestens einen Reifens (102) selbsttätig zu assistieren,
**dadurch gekennzeichnet, dass**
der Füllzustandsanpassungsassistent (106) eingerichtet ist, bei Erkennen des Vorliegens der Situation ein Wiederholintervall eines Erfassens eines Reifendrucks von mindestens einem der Reifen (102) zu erhöhen,
wobei eine Sendehäufigkeit erhöht wird, wenn während des erhöhten Wiederholintervalls ein Druckanstieg oder Druckabfall einen vorgebbaren Schwellwert überschreitet.

2. Vorrichtung nach Anspruch 1, wobei die Situationserkennungseinheit (104) und der Füllzustandsanpassungsassistent (106) Komponenten einer Fahrzeugelektronik sind.

3. Vorrichtung nach Anspruch 1 oder 2, wobei die Situationserkennungseinheit (104) eingerichtet ist, eine Situation als eine zu erkennen, in der ein Anpassen eines Füllzustands von mindestens einem der Reifen (102) des Fahrzeugs (100) zu erwarten ist, wenn mindestens eines der folgenden Kriterien erfüllt ist:
• Erkennen eines Entriegelns einer Tankklappe (108);
• Erkennen eines Abstellens des Fahrzeugs (100) nach vorheriger Mitteilung an den Benutzer des Fahrzeugs (100), dass der Füllzustand von zumindest einem der Reifen (102) anzupassen ist;
• Erkennen eines Abstellens des Fahrzeugs (100) an einer Tankstelle;
• Erkennen eines Abstellens des Fahrzeugs (100), nachdem ein Treibstoffstand in einem Tank (122) des Fahrzeugs (100) unter einen voreingestellten Schwellwert abgesunken ist.

4. Vorrichtung nach einem der Ansprüche 1 bis 3, wobei die Situationserkennungseinheit (104) eingerichtet ist, bei Erkennen der Situation den Füllzustandsanpassungsassistenten (106) zu aktivieren.

5. Vorrichtung nach einem der Ansprüche 1 bis 4, wobei der Füllzustandsanpassungsassistent (106) eingerichtet ist, bei Erkennen des Vorliegens der Situation dem Benutzer anzuzeigen, ob eine Befüllung oder Entleerung für einen bestimmten Reifen (102) fortzusetzen ist.

6. Vorrichtung nach einem der Ansprüche 1 bis 5, aufweisend eine Mensch-Maschine-Schnittstelle (110), die eingerichtet ist, dem Benutzer eine Assistierinformation des Füllzustandsanpassungsassistenten (106) anzuzeigen, insbesondere optisch und/oder akustisch anzuzeigen.

7. Vorrichtung nach einem der Ansprüche 1 bis 6, wobei der Füllzustandsanpassungsassistent (106) eingerichtet ist, eine Fahrzeugressource, insbesondere eine Fahrgastzellenbeleuchtung (112) und/oder eine Soundanlage (114), anzusteuern, um dem Benutzer eine Assistierinformation des Füllzustandsanpassungsassistenten (106) anzuzeigen.

8. Vorrichtung nach einem der Ansprüche 1 bis 7, aufweisend eine Füllablaufvorhersageeinheit (116), die eingerichtet ist, einen wahrscheinlichen Füllablauf eines Benutzers des Fahrzeugs vorherzusagen und diesen dem Füllzustandsanpassungsassistenten (106) als Grundlage für das Assistieren zu übermitteln.

9. Vorrichtung nach Anspruch 8, wobei die Füllablaufvorhersageeinheit (116) eingerichtet ist, den wahrscheinlichen Füllablauf basierend auf mindestens einer der folgenden Annahmen eines Verhaltens des Benutzers vorherzusagen:
• Beginn des Füllablaufs an einem einer Fahrertür des Fahrzeugs (100) räumlich nächstgelegenen Reifen (102);
• Beginn des Füllablaufs an einem Reifen (102), für den dem Benutzer eine vorherige Mitteilung übermittelt wurde, dass der Füllzustand dieses Reifens (102) anzupassen ist;
• Ablauf des Füllablaufs in Uhrzeigersinn um das Fahrzeug (100) herum;
• Füllablauf in Übereinstimmung mit einem oder mehreren Füllabläufen des Benutzers in der Vergangenheit.

10. Vorrichtung nach einem der Ansprüche 1 bis 9, aufweisend eine Füllzustandserkennungseinheit (118) mit einer Mehrzahl von Sensoren (120), die an den Reifen (102) des Fahrzeugs (100) angeordnet sind und zum Ermitteln eines Reifendrucks für jeden der Reifen (102) eingerichtet sind.

11. Fahrzeug (100), aufweisend eine Vorrichtung zum Überwachen eines Füllzustands einer Mehrzahl von Reifen (102) des Fahrzeugs (100) nach einem der Ansprüche 1 bis 10.

12. Verfahren zum Überwachen eines Füllzustands einer Mehrzahl von Reifen (102) eines Fahrzeugs (100), mit einer Vorrichtung zum Überwachen eines Füllzustands mit einem Füllzustandsanpassungsassistenten, wobei das Verfahren aufweist:
• Erkennen einer Situation, in der ein Anpassen des Füllzustands von mindestens einem der Reifen (102) des Fahrzeugs (100) zu erwarten ist, und
• selbsttätiges Assistieren eines Benutzers des Fahrzeugs (100) während des Anpassens des Füllzustands des mindestens einen Reifens (102) bei Erkennen des Vorliegens der Situation,
**gekennzeichnet durch** den Schritt
Erhöhen eines Wiederholintervalls eines Erfassens eines Reifendrucks von mindestens einem Reifen (102) **durch** den Füllzustandsanpassungsassistenten bei Erkennen des Vorliegens der Situation und
Erhöhen einer Sendehäufigkeit, wenn während des erhöhten Wiederholintervalls ein Druckanstieg oder Druckabfall einen vorgebbaren Schwellwert überschreitet.

13. Computerlesbares Speichermedium, in dem ein Programm zum Überwachen eines Füllzustands einer Mehrzahl von Reifen (102) eines Fahrzeugs (100) gespeichert ist, welches Programm zum Durchführen oder Steuern des Verfahrens nach Anspruch 12 eingerichtet ist.

14. Programm-Element zum Überwachen eines Füllzustands einer Mehrzahl von Reifen (102) eines Fahrzeugs (100), das, wenn es von einem Prozessor ausgeführt wird, zum Durchführen oder Steuern des Verfahrens nach Anspruch 12 eingerichtet ist.

## Claims

1. Apparatus for monitoring a filling level of a plurality of tyres (102) of a vehicle (100), the apparatus having:
• a situation detection unit (104) which is set up to detect a situation in which adaptation of the filling level of at least one of the tyres (102) of the vehicle (100) can be expected; and
• a filling level adaptation assistant (106) which is set up to automatically assist a user of the vehicle (100) during adaptation of the filling level of the at least one tyre (102) when the presence of the situation is detected **characterized in that**
the filling level adaptation assistant (106) is set up to increase a repetition interval for detecting a tyre pressure of at least one of the tyres (102) when the presence of the situation is detected,
a transmission frequency being increased, if, during the increased repetition interval, a pressure rise or a pressure fall exceeds a predefinable threshold value.

2. Apparatus according to Claim 1, the situation detection unit (104) and the filling level adaptation assistant (106) being components of vehicle electronics.

3. Apparatus according to Claim 1 or 2, the situation detection unit (104) being set up to detect a situation as a situation in which adaptation of a filling level of at least one of the tyres (102) of the vehicle (100) can be expected if at least one of the following criteria is met:
• detection of unlocking of a tank flap (108);
• detection of switching-off of the vehicle (100) after the user of the vehicle (100) has previously been informed that the filling level of at least one of the tyres (102) should be adapted;
• detection of switching-off of the vehicle (100) at a filling station;
• detection of switching-off of the vehicle (100) after a fuel level in a tank (122) of the vehicle (100) has fallen below a preset threshold value.

4. Apparatus according to one of Claims 1 to 3, the situation detection unit (104) being set up to activate the filling level adaptation assistant (106) when the situation is detected.

5. Apparatus according to one of Claims 1 to 4, the filling level adaptation assistant (106) being set up to indicate to the user whether filling or emptying should be continued for a particular tyre (102) when the presence of the situation is detected.

6. Apparatus according to one of Claims 1 to 5, having a man-machine interface (110) which is set up to indicate an item of assistance information from the filling level adaptation assistant (106), in particular to optically and/or acoustically indicate said information, to the user.

7. Apparatus according to one of Claims 1 to 6, the filling level adaptation assistant (106) being set up to drive a vehicle resource, in particular a passenger compartment illumination unit (112) and/or a sound system (114), in order to indicate an item of assistance information from the filling level adaptation assistant (106) to the user.

8. Apparatus according to one of Claims 1 to 7, having a filling sequence prediction unit (116) which is set up to predict a probable filling sequence of a user of the vehicle and to transmit this sequence to the filling level adaptation assistant (106) as the basis for assistance.

9. Apparatus according to Claim 8, the filling sequence prediction unit (116) being set up to predict the probable filling sequence on the basis of at least one of the following assumptions of a behaviour of the user:
• start of the filling sequence at a tyre (102) spatially closest to a driver's door of the vehicle (100);
• start of the filling sequence at a tyre (102) for which the user was previously informed that the filling level of this tyre (102) should be adapted;
• progress of the filling sequence in the clockwise direction around the vehicle (100);
• filling sequence in accordance with one or more filling sequences carried out by the user in the past.

10. Apparatus according to one of Claims 1 to 9, having a filling level detection unit (118) with a plurality of sensors (120) which are arranged on the tyres (102) of the vehicle (100) and are set up to determine a tyre pressure for each of the tyres (102).

11. Vehicle (100) having an apparatus for monitoring a filling level of a plurality of tyres (102) of the vehicle (100) according to one of Claims 1 to 10.

12. Method for monitoring a filling level of a plurality of tyres (102) of a vehicle (100), having an apparatus for monitoring a filling level with a filling level adaptation assistant, the method involving:
• detecting a situation in which adaptation of the filling level of at least one of the tyres (102) of the vehicle (100) can be expected; and
• automatically assisting a user of the vehicle (100) during adaptation of the filling level of the at least one tyre (102) when the presence of the situation is detected, **characterized by** the step of
increasing a repetition interval for detecting a tyre pressure of at least one tyre (102) by the filling level adaptation assistant when the presence of the situation is detected, and
increasing a transmission frequency if, during the increased repetition interval, a pressure rise or pressure drop exceeds a predefinable threshold value.

13. Computer-readable storage medium which stores a program for monitoring a filling level of a plurality of tyres (102) of a vehicle (100), which program is set up to carry out or control the method according to Claim 12.

14. Program element for monitoring a filling level of a plurality of tyres (102) of a vehicle (100), which program element, when it is executed by a processor, is set up to carry out or control the method according to Claim 12.

## Revendications

1. Dispositif de surveillance de l'état de gonflage d'une pluralité de pneus (102) d'un véhicule (100), le dispositif présentant :
• une unité de détection de situation (104) configurée pour détecter une situation dans laquelle une adaptation de l'état de gonflage d'au moins un des pneus (102) du véhicule (100) est à prévoir, et
• un assistant d'adaptation de l'état de gonflage (106) configuré pour, lors de la détection de l'existence de la situation, assister automatiquement un utilisateur du véhicule (100) pendant l'adaptation de l'état de gonflage de l'au moins un des pneus (102),
**caractérisé en ce que** l'assistant d'adaptation de l'état de gonflage (106) est configuré pour augmenter l'intervalle de répétition de la détection de la pression d'au moins un des pneus (102) en cas de détection de la situation, la fréquence d'émission étant augmentée lorsqu'une élévation ou une baisse de la pression dépasse une valeur seuil prédéfinissable dans l'intervalle de répétition augmenté.

2. Dispositif selon la revendication 1, l'unité de détection de situation (104) et l'assistant d'adaptation de l'état de gonflage (106) étant des composants d'une électronique embarquée.

3. Dispositif selon la revendication 1 ou 2, l'unité de détection de situation (104) étant configurée pour détecter une situation comme étant l'une dans laquelle une adaptation de l'état de gonflage d'au moins un des pneus (102) du véhicule (100) est à prévoir lorsque au moins un des critères suivants est satisfait :
• Détection du déverrouillage de la trappe de réservoir (108) ;
• Détection d'un arrêt du véhicule (100) suite à l'envoi à l'utilisateur du véhicule (100) d'un message préalable indiquant que l'état de gonflage d'au moins un des pneus (102) doit être adapté ;
• Détection d'un arrêt du véhicule (100) à une station-service ;
• Détection d'un arrêt du véhicule (100) après que le niveau de carburant dans le réservoir (122) du véhicule (100) est descendu en dessous d'une valeur seuil préréglé.

4. Dispositif selon l'une quelconque des revendications 1 à 3, l'unité de détection de situation (104) étant configurée pour activer l'assistant d'adaptation de l'état de gonflage (106) en cas de détection de la situation.

5. Dispositif selon l'une quelconque des revendications 1 à 4, l'assistant d'adaptation de l'état de gonflage (106) étant configuré pour signaler à l'utilisateur, en cas de détection de l'existence de la situation, si le gonflage ou le dégonflage d'un certain pneu (102) doit être poursuivi.

6. Dispositif selon l'une quelconque des revendications 1 à 5, présentant une interface homme/machine (110) configurée pour signaler à l'utilisateur, en particulier de manière visuelle et/ou sonore, une information d'assistance de l'assistant d'adaptation de l'état de gonflage (106).

7. Dispositif selon l'une quelconque des revendications 1 à 6, l'assistant d'adaptation de l'état de gonflage (106) étant configuré pour déclencher une ressource du véhicule, en particulier un éclairage de l'habitacle (112) et/ou une installation audio (114), afin de signaler à l'utilisateur une information d'assistance de l'assistant d'adaptation de l'état de gonflage (106).

8. Dispositif selon l'une quelconque des revendications 1 à 7, présentant une unité de prédiction d'opération de gonflage (116) configurée pour prédire une opération de gonflage probable d'un utilisateur du véhicule et pour la transmettre à l'assistant d'adaptation de l'état de gonflage (106) en tant que base de l'assistance.

9. Dispositif selon la revendication 8, l'unité de prédiction d'opération de gonflage (116) étant configurée pour prédire l'opération de gonflage probable sur la base d'au moins une des hypothèses suivantes de comportement de l'utilisateur :
• Début de l'opération de gonflage sur un pneu (102) le plus proche dans l'espace de la porte côté conducteur du véhicule (100) ;
• Début de l'opération de gonflage sur un pneu (102) pour lequel l'utilisateur a précédemment reçu un message indiquant que l'état de gonflage de ce pneu (102) doit être adapté ;
• Exécution de l'opération de gonflage dans le sens des aiguilles d'une montre autour du véhicule (100) ;
• Exécution de l'opération de gonflage conformément à une ou plusieurs opérations de gonflage exécutées par l'utilisateur dans le passé.

10. Dispositif selon l'une quelconque des revendications 1 à 9, présentant une unité de détection de gonflage (118) dotée d'une pluralité de capteurs (120) disposée sur les pneus (102) du véhicule (100) et configurée pour déterminer la pression de chacun des pneus (102).

11. Véhicule (100) présentant un dispositif de surveillance de l'état de gonflage d'une pluralité de pneus (102) du véhicule (100) selon l'une quelconque des revendications 1 à 10.

12. Procédé de surveillance de l'état de gonflage d'une pluralité de pneus (102) d'un véhicule (100) au moyen d'un dispositif de surveillance de l'état de gonflage doté d'un assistant d'adaptation de l'état de gonflage, le procédé présentant :
• la détection d'une situation dans laquelle une adaptation de l'état de gonflage d'au moins un des pneus (102) du véhicule (100) est à prévoir, et
• l'assistance automatique, en cas de détection de l'existence de cette situation, d'un utilisateur du véhicule (100) pendant l'adaptation de l'état de gonflage d'au moins un des pneus (102),
**caractérisé en ce que** l'étape consistant à augmenter l'intervalle de répétition de la détection de la pression d'au moins un pneu (102) par l'assistant d'adaptation de l'état de gonflage en cas de détection de l'existence de la situation et augmenter une fréquence d'émission lorsqu'une élévation ou une baisse de la pression dépasse une valeur seuil prédéfinissable dans l'intervalle de répétition augmenté.

13. Support d'enregistrement lisible informatiquement sur lequel est enregistré un programme de surveillance de l'état de gonflage d'une pluralité de pneus (102) d'un véhicule (100), lequel programme est configuré pour réaliser ou commander le procédé selon la revendication 12.

14. Élément de programme de surveillance de l'état de gonflage d'une pluralité de pneus (102) d'un véhicule (100) qui, lorsqu'il est exécuté par un processeur, est configuré pour réaliser ou commander le procédé selon la revendication 12.
